# EUROPEAN PATENT SPECIFICATION

(11) **EP 4 108 895 B1**
(45) Date of publication and mention of the grant of the patent: **21.01.2026**
(21) Application number: 22175374.2
(22) Date of filing: 25.05.2022
(51) Int. Cl.: F02C 6/00, F02C 6/08, F02C 6/20, F02C 9/00, F02C 9/18, F02C 9/28, F02C 9/42, F02C 9/52

(54) **METHOD OF CONTRAIL MITIGATION AND AIRCRAFT HAVING CONTRAIL MITIGATION FUNCTIONALITY**
VERFAHREN ZUR KONDENSSTREIFENABSCHWÄCHUNG UND FLUGZEUG MIT KONDENSSTREIFENABSCHWÄCHUNGSFUNKTION
PROCÉDÉ D'ATTÉNUATION DE LA TRAÎNÉE DE CONDENSATION ET AÉRONEF DOTÉ D'UNE FONCTIONNALITÉ D'ATTÉNUATION DE LA TRAÎNÉE DE CONDENSATION

(30) Priority: 22.06.2021 GB 202108910
(43) Date of publication of application: 28.12.2022
(73) Proprietor: Rolls-Royce plc, London N1 9FX (GB)
(72) Inventor: Swann, Peter, Derby, DE24 8BJ (GB); Fletcher, Paul, Derby, DE24 8BJ (GB)
(74) Representative: Rolls-Royce plc

(56) References cited:
- GB-A- 2 524 772
- GB-A- 2 524 775
- US-A1- 2015 284 102

## Description

### TECHNICAL FIELD

The invention relates to methods of contrail (i.e. condensation trail or vapour trail) mitigation and to aircraft having contrail mitigation or suppression functionality.

### BACKGROUND

Contrails, also known as condensation trails or vapour trails, are line-shaped ice-clouds that appear behind aircraft under certain circumstances. If ambient air is super-saturated with respect to ice, then a contrail may persist for several hours, growing to resemble natural cirrus cloud, both in size and optical properties, and is then referred to as "contrail-cirrus". Line-shaped contrails and contrail-cirrus are collectively referred to as "aviation-induced cloudiness" (AIC).

The impact of AIC upon the earth's energy balance comprises two aspects. During the day, AIC reflects incoming sunlight back into space, leading to an advantageous climate cooling effect. During both day and night, AIC also intercepts and retains outgoing infrared radiation, leading to unwanted warming. The net effect is warming. Furthermore, the net effect represents a significant element of aviation's total climate forcing.

As the exhaust of an aircraft engine mixes with ambient air, local relative humidity over water (RHw) rises to a maximum before declining to ambient levels. If during this time local RHw exceeds 100%, water vapour can condense onto activated soot particles, coating them with liquid water. Following freezing, further depositional growth is possible as water vapour is deposited as ice onto the contrail particles.

The requirement for RHw to reach or exceed 100% during mixing in order for a contrail to form is known as the Schmidt-Appleman criterion. Fulfilment or non-fulfilment of this criterion is determined by a combination of ambient conditions and engine-related parameters such as engine total operating efficiency and the properties of the fuel being burned. Specifically, if engine operating efficiency is higher, the criterion is fulfilled over a wider range of ambient conditions, and hence over a wider range of altitudes.

The climate warming impact of a contrail is influenced by (amongst other things) its optical depth, and by its lifetime. Optical depth is strongly influenced by number density of ice particles.

Temporary reduction of engine operating efficiency is known as one way of providing a degree of contrail mitigation, and there are many documented ways of achieving this e.g. use of a variable area fan nozzle, variable-angle fan outlet guide vanes, an afterburner or handling bleeds. In all cases, in order to maintain desired thrust, the fuel-flow rate must be increased, leading to an increase in turbine entry temperature (TET), which leads to a reduction in the operating lifetime of an engine. Furthermore, in order to achieve a meaningful degree of contrail mitigation, the required temporary operating efficiency change could (on occasions) be quite large, leading to a TET rise which exceeds an acceptable limit for an engine.

Use of handling bleeds can advantageously deliver a large temporary operating efficiency reduction using standard engine hardware, i.e. with no weight penalty and no design changes. However, since a handling bleed removes air from the core cycle of an engine upstream of the combustor of the engine, use of a handling bleed results in an additional TET increase for a given thrust, since the combustion temperature rise of an engine for a given fuel mass-flow rate is increased by the reduction in core air mass-flow rate attributable to use of handling bleed.

US patent 9 896 218 discloses a method of reducing engine efficiency at constant aircraft thrust by re-distributing thrust between inboard and outboard engines of an aircraft. Although this method has the advantage of not requiring specialised equipment, it is limited in the extent of engine efficiency reduction that can be achieved and is thus also limited with regard to the range of circumstances in which contrail suppression can be achieved.

US patent 9 399 521 discloses a method of reducing the optical depth of a contrail by redistributing thrust between inboard and outboard engines of an aircraft in order to alter at least one of the total rate at which soot particles are emitted and the distribution between the inboard and outboard engines of the total rate of soot emission. However, typically suppression of contrails cannot be achieved. Also disclosed is a method of contrail mitigation which requires use of two different fuels types. However this presents other technical challenges. Also, suppression of contrails cannot be achieved.

### BRIEF SUMMARY

A first aspect of the present invention provides a method of reducing the respective optical depths of one or more contrails produced by an aircraft having a set of at least two gas turbine engines each of which is arranged to provide propulsive thrust to the aircraft, the set of at least two gas turbine engines consisting of first and second subsets of gas turbine engines, the method being characterised by the steps of:
(i) for each gas turbine engine in the first subset of the set of gas turbine engines, reducing the operating efficiency of a gas turbine engine independently of the fuel flow to that engine and hence producing a reduction in thrust provided by that gas turbine engine;
(ii) for each gas turbine engine in the second subset of the set of gas turbine engines, increasing the fuel flow to a gas turbine engine to increase the thrust provided by that gas turbine engine; and
(iii) controlling the fuel flow to each gas turbine engine in the first subset,
such that each gas turbine engine in the set of gas turbine engines experiences substantially the same increase in turbine entry temperature and/or the same resulting turbine entry temperature.

A reduction in thrust provided by gas turbine engines of the first subset is at least partially compensated by an increase in thrust provided by gas turbine engines of the second subset produced by increasing the fuel flow to gas turbine engines of the second subset. The TET rises of gas turbine engines of the first and second subsets are substantially less than would be the case for engines of the first subset if the reduction in thrust of gas turbine engines of the first subset were to be compensated to the same degree by increasing fuel flow to those engines. The invention thus provides contrail mitigation by means of reduction in engine operating efficiency, whilst limiting the increase in the rate at which the gas turbine engines of the aircraft are degraded due to TET increases. Furthermore, gas turbine engines of the first subset may be selected to include those gas turbine engines for which contrail mitigation is greatest for a given reduction in operating efficiency. The operating efficiency of each gas turbine engine in the first subset is reduced, the fuel flow to each gas turbine engine in the second subset increased and the fuel flow to each gas turbine engine in the first subset adjusted, if necessary, such that each gas turbine engine in the set of gas turbine engines experiences the same increase in turbine entry temperature (TET) and/or the same resulting turbine entry temperature, in order to distribute the adverse impacts of TET increase on engine lifetime evenly across all engines in the set of gas turbine engines.

The set of gas turbine engines may be a set of like gas turbine engines, the operating efficiency of each gas turbine engine in the first subset of the set of gas turbine engines being reduced in step (i) by a common amount to produce a common reduction in thrust provided by each gas turbine engine in the first subset, and the fuel flow to each gas turbine engine in the second subset of the set of gas turbine engines being increased in step (ii) by a common amount to increase the thrust provided by each gas turbine engine in the second subset by a common amount. Implementation of the method is thereby simplified, particularly in cases where the first and second subsets of the gas turbine engines correspond to inboard and outboard engines of the aircraft respectively, or to outboard and inboard engines of the aircraft respectively.

In order to maintain the total thrust provided to the aircraft when the method is carried out, the total increase in thrust provided by gas turbine engines of the second subset may be arranged to be equal to the total reduction in thrust provided by gas turbine engines of the first subset.

The fuel flow to each gas turbine engine in the first subset may remain constant when step (i) is carried out. Alternatively, respective fuel flows to one or more gas turbine engines in the first subset may need to be increased when step (i) is carried out, thereby mitigating the reduction in thrust provided by the one or more gas turbine engines of the first subset when their efficiencies are reduced. The increase in TET for gas turbine engines of the second subset is thereby reduced (for a fixed total thrust change) compared to the case where respective fuel flows to the one or more gas turbine engines of the first subset are kept constant. Conversely, respective fuel flows to one or more gas turbine engines in the first subset may need to be reduced when step (i) is carried out, thereby causing a greater reduction in thrust provided by the one or more gas turbine engines of the first subset than that attributable only to reduction in their operating efficiencies. This results in a higher TET rise for gas turbine engines of the second subset (for a fixed total thrust change) than is the case if the respective fuel flow rates to the one or more gas turbine engines of the first subset are kept constant.

Preferably, in step (i), the respective operating efficiencies of one or more gas turbine engines in the first subset are reduced by opening respective handling bleeds thereof, as the one or more gas turbine engines then require no special or additional apparatus. (A handling bleed of a gas turbine engine may comprise one or more individual openable apertures around the circumference of the gas annulus of the engine.) However, the operating efficiency of a given gas turbine engine in the first subset may alternatively be reduced by other means, for example control of a variable-area fan nozzle, variable-angle outlet guide vanes or an afterburner of the gas turbine engine.

Preferably, each handling bleed is taken from the output of a compressor of a respective gas turbine engine, in order that surge lines of the compressor are unaffected and to avoid the need for modification of a variable inlet guide vane schedule of the gas turbine engine. Each handling bleed may be taken from the output of a high-pressure compressor of a respective gas turbine engine in order to maximise the operating efficiency reduction per unit mass flow rate of air removed from the core cycle of the gas turbine engine. The handling bleed may alternatively be taken from the output of the low-pressure compressor or booster or from the output of the intermediate-pressure compressor of a respective gas turbine engine (the latter being an option in the case of a three-shaft engine). In these cases, bleed air is at a lower temperature than if bleed air is taken from the output of the high-pressure compressor, providing for simpler handling of the bleed air.

Each handling bleed is preferably switched from a closed condition to an open condition over a period of time greater than or equal to a pre-determined minimum period of time necessary to prevent spool-speed transients in the one or more gas turbine engines of the first subset, a spool-speed transient being an unacceptably large rate of change of spool-speed which may result in an excessive degradation rate of a gas turbine engine or damage to the engine.

Air removed from a gas turbine engine of the first subset via a handling bleed may be used to provide reverse thrust for the aircraft, providing an increased reduction in operating efficiency of the gas turbine engine per unit mass flow rate of air extracted via the handling bleed.

Air removed from a gas turbine engine of the first subset via a handling bleed may be cooled by heat exchange with bypass air of the gas turbine engine and optionally provided to a cabin of the aircraft. Bypass air is thereby warmed, advantageously reducing the range of altitudes over which contrails can be formed. The resulting cooled air may be used for cabin environmental control on board the aircraft.

Where the aircraft has inboard and outboard engines, the first subset of gas turbine engines may consist of inboard gas turbine engines of the aircraft and the second subset of gas turbine engines may consist of outboard gas turbine engines of the aircraft. Alternatively, the first subset of gas turbine engines may consist of outboard gas turbine engines of the aircraft and the second subset of gas turbine engines may consist of inboard engines of the aircraft. Inboard and outboard engines of the aircraft may be assigned to either the first or second subsets of gas turbine engines according to whichever option provides the greatest contrail mitigation per unit of additional fuel consumed when the method is carried out.

A second aspect of the invention provides an aircraft comprising a set of at least two gas turbine engines each of which is arranged to provide propulsive thrust to the aircraft, the set of at least two gas turbine engines consisting of first and second subsets of gas turbine engines, a controller and at least one sensor arranged to detect one or more ambient conditions of the aircraft and provide corresponding sensor data to the controller, characterised in that the controller is arranged to control:
(a) the operating efficiency of any given gas turbine engine within a first subset of the set of gas turbine engines, independently of the fuel flow to that engine;
(b) the fuel flow to each gas turbine engine within a second subset of the set of gas turbine engines; and
(c) the fuel flow to any given gas turbine engine in the first subset,
in order to implement a method according to the first aspect of the invention on receiving sensor data corresponding to ambient atmospheric conditions of the aircraft consistent with contrail formation.

The controller may be arranged to control the operating efficiency of each gas turbine engine in the first subset by controlling respective handling bleeds thereof. One or more handling bleeds may be taken from the output of a compressor of a respective engine, for example a high-pressure compressor, an intermediate pressure compressor (in the case of a three-shaft gas turbine engine) or a low-pressure compressor or booster.

Air from one or more handling bleeds may be arranged to provide reverse thrust for the aircraft, thus providing an increased reduction in operating efficiency of a gas turbine engine per unit mass flow rate of air extracted via the handling bleed.

Air from each of one or more handling bleeds may be arranged to pass through a respective conduit arranged for heat exchange with bypass air of a respective gas turbine engine. This provides for the bypass air to be warmed, reducing the ranges of altitudes over which contrails are formed. Air from a handling bleed which is cooled by heat exchange with bypass may be arranged to be provided to a cabin of the aircraft for environmental control purposes.

The first and second subsets of gas turbine engines may be inboard and outboard gas turbine engines of the aircraft respectively, the controller being arranged to implement a method according to the first aspect of the invention when the ambient air of the aircraft has a relative humidity over ice RHi in the range 100% ≤ RHi ≤ X where X is in the range 110% ≤ X ≤ 120%. Alternatively, the first and second subsets of gas turbine engines may be respectively outboard and inboard engines of the aircraft, the controller being arranged to implement a method according to the first aspect of the invention when the ambient air of the aircraft has a relative humidity over ice RHi ≥ X where X is approximately 130%. In either case, the controller may be arranged to estimate the reduction in effective radiative forcing and the increase in fuel consumption which would result from implementing the method of the first aspect of the invention, and to implement the method only if the reduction in effective radiative forcing per unit of additional fuel consumption exceeds a pre-determined threshold.

### BRIEF DESCRIPTION OF THE DRAWINGS

Embodiments of the invention are described below by way of example only and with reference to the accompanying drawings in which:
- Figure 1: shows a four-engine aircraft in flight with all engines producing contrails;
- Figure 2: shows a four-engine aircraft of the invention in flight with contrail mitigation action being applied;
- Figure 3: shows a graph of soot emission index as a function of thrust for an engine of the Figure 2 aircraft;
- Figure 4: is a flow chart illustrating steps in a method of the invention which may be carried out in respect of the Figure 2 aircraft; and
- Figure 5: shows a series of possible aircraft flight paths having different path lengths within ice-supersaturated air.

### DETAILED DESCRIPTION

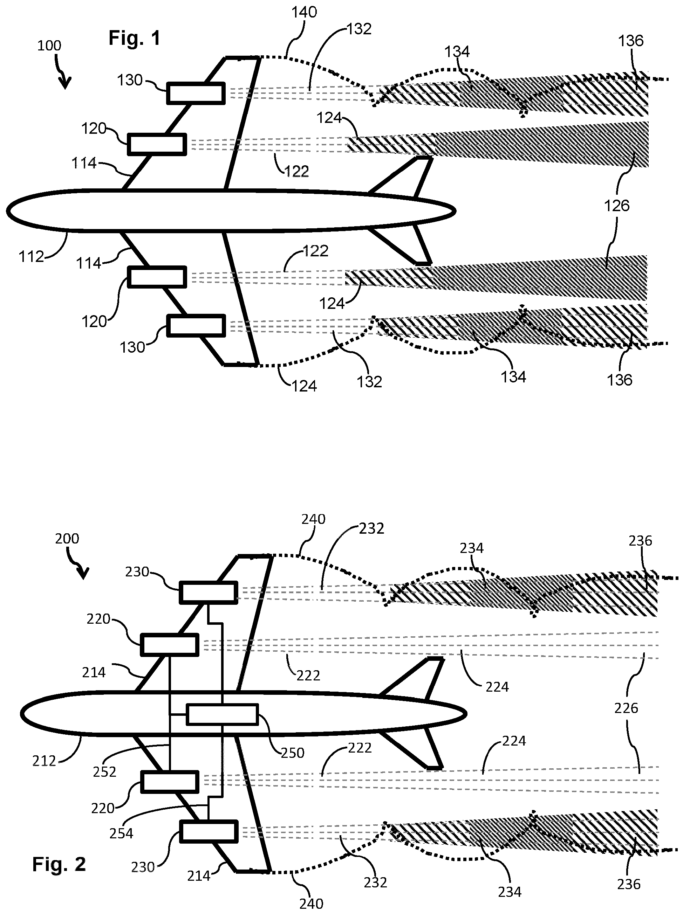

Figure 1 shows a conventional aircraft 100 in flight, the aircraft 100 comprising a fuselage 112 and wings 114. Each wing 114 creates a respective wingtip vortex 140. To each wing 114 is mounted an inboard engine 120 and an outboard engine 130, each of the engines 120, 130 being a gas turbine engine such as a turbofan engine. Each inboard engine 120 produces a respective exhaust jet 122 in which a contrail 124 may form. Each outboard engine 130 produces a respective exhaust jet 132 in which a contrail 134 may form. The contrail 134 of an outboard engine 130 interacts more strongly with the corresponding wingtip vortex 140 than does the contrail 124 of the corresponding inboard engine 120. As a result, the optical depth of the contrails 134 as observed at locations 136 is lower than the optical depth of the contrails 124 observed at corresponding locations 126 when the ambient air of the aircraft 100 is only modestly ice-super-saturated. The locations 126 and 136 correspond to a distance behind the aircraft at which the wingtip vortex 140 has dissipated. Figure 1 is therefore is not to scale.

The contrails 124, 134 may be supressed by reducing the operating efficiency of each of the engines 120, 130. The operating efficiency of an engine 120, 130 may be reduced by one of a number of techniques, e.g. by adjusting a variable area fan nozzle of the engine or variable fan-outlet guide vanes, or by adjusting an afterburner or handling bleed of the engine. Disadvantageously, the cost associated with increased fuel-burn directly attributable to the reduction in engine operating efficiency is the same for all engines 120, 130, but the reduction in contrail impact is less for the outboard engines 130 since, in the absence of contrail mitigation action, the contrail optical depth at location 136 would be less than that at location 126. A uniform approach to contrail mitigation for all engines 120, 130 is therefore not optimally efficient. Furthermore, the rise in turbine entry temperature (TET) of each engine 120, 130 may be significant, especially if the chosen method of engine operating efficiency reduction is handling bleed-valve use, for reasons described above.

Figure 2 shows a first example aircraft 200 of the present invention, in which a controller 250 is in signal communication with the aircraft's inboard 220 and outboard 230 engines via communication paths 252, 254 respectively, the inboard 220 and outboard 230 engines making up a set of gas turbine engines arranged to provide thrust for the aircraft 200. The controller 250 may comprise or alternatively may be in signal communication with sensors (not shown) for one or more of ambient temperature, ambient pressure, ambient humidity, ambient relative humidity, and/or ambient relative humidity over ice. Parts of the aircraft 200 which correspond to parts of the aircraft 100 of Figure 1 are labelled with reference signs differing by 100 from those labelling the corresponding parts in Figure 1.

In one mode of operation, if the controller 250 determines that contrail mitigation is necessary, contrail mitigation action is targeted to a first subset of the set of gas turbine engines consisting of the inboard engines 220 by temporarily reducing the operating efficiency of the inboard engines 220, by instructing opening of handling bleeds of the inboard engines 220, and simultaneously the controller 250 instructs fuel flow to each of a second subset of the set of gas turbine engines consisting of the outboard engines 230 to be increased in order to maintain the total net thrust provided by the engines 220, 230 to the aircraft 200.

This method has two benefits. Firstly, the temporary reduction in engine operating efficiency necessary to achieve contrail mitigation may be large in magnitude and so the restriction of that penalty to the inboard engines (where pre-mitigation post-vortex contrail optical depth (location 126) is higher than the pre-mitigation post-vortex contrail optical depth of the outboard engines (location 136)) improves the benefit-to-cost ratio of contrail mitigation action. Secondly, by using the outboard engines 230 (rather than the inboard engines 220) to make up the thrust deficit arising from the reduction in operating efficiency of the inboard engines 220, the thrust deficit is rectified with a smaller rise in TET than would be the case if the thrust deficit were rectified by increased fuel flow to the inboard engines 220. This is because the total working fluid mass-flow rate through a combustor of an outboard engine 230 is not (as for the inboard engines 220) reduced by the action of handling bleeds, and so the temperature rise associated with a particular additional mass-flow rate of fuel is not increased. Therefore, an increase in fuel mass-flow rate required to provide additional thrust results in a TET increase that is smaller than it would be on the inboard engines 220 where the working fluid mass-flow rate (and hence the heat capacity of the working fluid) has been substantially reduced as a result of the engine operating efficiency reduction measure. Furthermore, the missing thrust is provided by engines 230 working at or close to their optimum operating efficiency level. Increasing the thrust setting of the outboard engines 230 may move these engines to a less efficient operating efficiency level but the operating efficiency penalty is small compared to that purposefully applied to the inboard engines 220.

A further benefit may be obtained by controlling the inboard engines 220 and outboard engines 230 such that they share the additional fuel-flow required to maintain the total thrust provided to the aircraft 200. Fuel-sharing is done not on a 50:50 basis, but rather in such a way that the resulting TET on the inboard engines 220 is substantially the same as that on the outboard engines 230. The outboard engines 230 still provide a greater fraction of the "missing" thrust (caused by reducing the efficiencies of the inboard engines 220) than the inboard engines 200, but the maximum TET rise is advantageously lower than if the outboard engines 230 alone make up the missing thrust, and much lower than if the inboard engines 220 alone make up the missing thrust arising from the reduction of engine operating efficiencies. Depending on the degree of engine operating efficiency reduction implemented on the inboard engines 220 (and the resulting reduction of core mass flow on those engines), the rise in TET experienced by the outboard engines 230 due to providing the "missing" thrust may be greater than or less than the rise in TET experienced by the inboard engines 220 as a result of their reduced core mass flow. Hence to achieve equal TET across all engines may involve the outboard engines 230 providing an additional thrust amount which is less than, equal to, or more than the "missing" thrust, in which case fuel-flow adjustments to the inboard engines 220 would be respectively positive, zero or negative compared to their default settings.

In the case where the outboard engines 230 alone provide the missing thrust arising from operating efficiency reduction of the inboard engines 220, and observing that the outboard engines 230 operate at substantially their optimum operating efficiency (excepting specific fuel consumption (SFC) - loop effects) while the inboard engines 220 are operating at a purposefully reduced operating efficiency level in order to achieve mitigation of inboard engine contrails 224, it may be possible to reduce further the operating efficiency penalty associated with the inboard-engine contrail mitigation activity. If the TET rise on the outboard engines 230 associated with provision of the missing thrust is modest in comparison with any TET limits or constraints on the outboard engines, it may be possible to increase fuel-flow to the outboard engines 230 still further, providing more than the "missing" thrust on the outboard engines, and at the same time reduce the fuel-flow rate to the inboard engines 220, hence further reducing thrust provided by the inboard engines 220. In this way, the inboard engines 220 still operate at a reduced operating efficiency consistent with contrail mitigation, but a greater percentage of the total thrust provided to the aircraft is provided by the outboard engines which operate at a substantially more efficient condition than the inboard engines 220.

In a second example aircraft of the invention, a three-engine aircraft has two outboard engines each mounted on a respective wing of the aircraft, and a single inboard engine mounted on the aircraft's centre-line. The three engines make up a set of gas turbine engines arranged to provide thrust to the aircraft. In this case, first and second subsets of the set of gas turbine engines may be made up of the inboard and outboard engines respectively. Sharing of missing thrust caused by operating efficiency reduction of the single inboard engine between the two outboard engines entails only a modest rise in TET for each of the outboard engines. Furthermore in the three-engine aircraft, the purposeful reduction of fuel-flow to the inboard engine, further reducing its thrust, and a corresponding further increase of fuel-flow to the outboard engines, allow mitigation of the fuel-efficiency penalty associated with contrail mitigation on the inboard engine by redistributing a material fraction of inboard (purposefully less-efficient) engine thrust to the pair of outboard (substantially optimally efficient) engines, each of which is moved less far from the optimum of its SFC loop by the additional thrust required of it (and may in fact be moved closer to its optimum operating efficiency).

As explained below, in another mode of operation and for certain other ambient atmospheric conditions, engine operating efficiency is reduced for each engine in a first subset of engines made up of outboard engines of an aircraft, and fuel flow is increased for each engine in a second subset of engines made up of inboard engines of an aircraft.

In a third example aircraft of the invention, a two-engine aircraft has two engines each mounted symmetrically with respect to the aircraft's wingtips and centre-line. The distinction between inboard and outboard engines does not arise, except to the extent that any yaw angle of the aircraft resulting from thrust asymmetry may alter the relative interactions of the engines' respective plumes with their corresponding wingtip vortices as described above. A first engine may be targeted for contrail mitigation action by reducing the operating efficiency of that engine, and fuel flow to the other engine (a second, non-targeted engine) increased to compensate for the reduction in thrust of the first engine caused by reduction the first engine's operating efficiency. Although the aircraft has no inboard and outboard engines as in the first and second embodiments described above, there are still opportunities to prioritise thrust increases to the second, non-targeted engine, firstly to make up the "missing" thrust associated with purposeful reduction in operating efficiency of the first engine in such a way as to minimise the resulting rise in TET of the first engine as discussed above, and secondly (optionally) to further redistribute thrust from the first engine to the second (nominally fully efficient) engine. This has particular benefits on engine types featuring fairly flat SFC loops, such as those with inter-turbine burning. However, thrust asymmetry incurs a drag penalty resulting from rudder deployment needed to correct the thrust asymmetry; the drag penalty results in an additional fuel-burn penalty which needs to be taken into account in determining whether or not to implement the method. Thus in a two-engine aircraft of the invention, there are again first and second subsets of engines (each made up of a single engine), although these do not correspond to inboard and outboard engines of the aircraft.

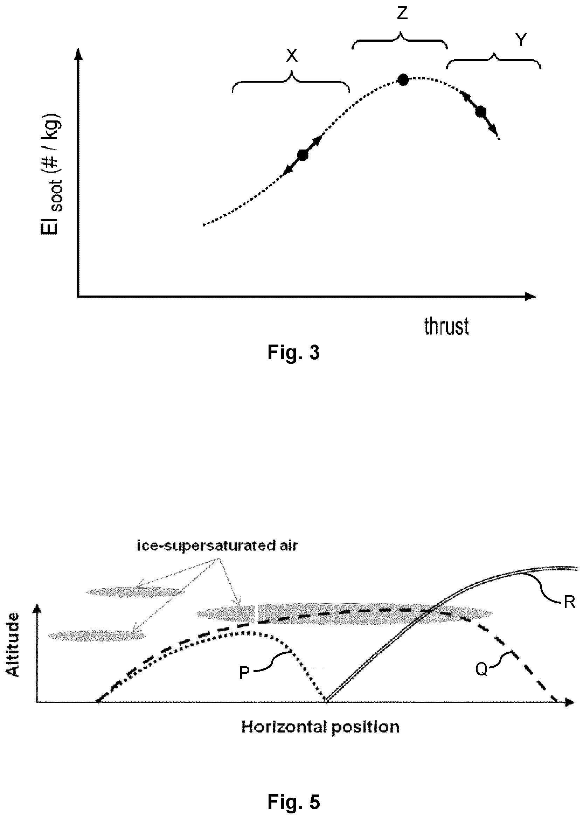

Increasing the rate of fuel-flow to an engine's combustor increases the mass of fuel burned by an engine per unit distance of aircraft travel, assuming the aircraft's forward speed remains constant by maintaining the total thrust provided to the aircraft. Provided the soot number emission index (EIₛₒₒₜ#, the number of soot particles emitted per unit mass of fuel burned) remains unchanged, then the number of soot particles emitted per metre of travel increases and hence the optical depth of a contrail produced by the engine also increases. However, Elₛₒₒₜ# itself is also typically a function of engine operating conditions. Figure 3 schematically illustrates different regimes of engine operation in which the gradient of Elₛₒₒₜ# with respect to thrust or fuel-flow is materially positive (thrust interval X), materially negative (thrust interval Y), or substantially zero (thrust interval Z). If the engine is operating in a regime in which the gradient is negative (Y), then increasing thrust may actually reduce the number of soot particles produced by the engine per metre of travel, causing contrail optical depth to be reduced. Alternatively, if Elₛₒₒₜ# is substantially unchanging with respect to thrust (regime Z), then the number density of soot particles will rise approximately linearly with fuel-flow rate. Alternatively, if the gradient is positive (regime X), then the number density of soot particles emitted by an engine will increase in a super-linear manner with increasing fuel-flow rate. Increasing the number density of soot particles emitted by the engine increases the number density of contrail ice particles produced by the engine (at least prior to interaction with an aircraft wingtip vortex).

Strong interaction of an exhaust plume with a wingtip vortex can, depending upon ambient ice super-saturation levels, have a diluting effect on any changes made to the pre-vortex contrail ice particle number density. Thus, even though additional soot particles are emitted into a contrail-forming engine exhaust plume rather than a contrail-suppressed exhaust plume, the effect of the additional soot emissions is in some cases partly or even completely compensated for by the wingtip vortex interaction. The extent to which ice particles are eliminated depends upon how strongly the engine exhaust plume is captured and retained within the vortex, and also upon the degree of ambient ice super-saturation.

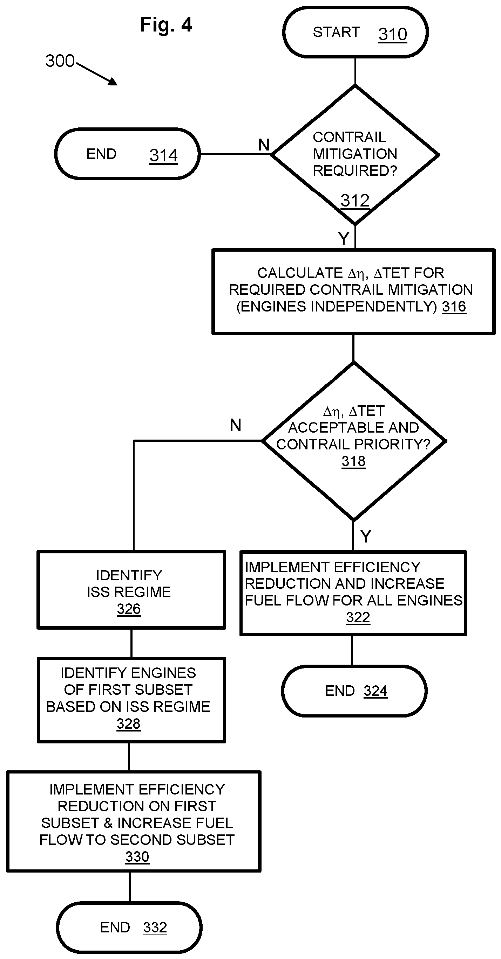

Referring to the flow chart 300 of Figure 4, the controller 250 of the aircraft 200 is programmed to implement the following steps.

### Step 1:

Start (310) and identify a requirement for contrail suppression or property-modification (collectively termed "mitigation") from processing of data received from one or more sensors associated with the controller 250 (312). If a requirement is identified, proceed to step 2 below. Otherwise, do not proceed to step 2 and end (314).

Contrail mitigation action may be required if a contrail is forming (as confirmed by observation) or is predicted to form (according to the Schmidt-Appleman criterion for example) from data corresponding to measurements of ambient conditions and knowledge of other quantities such as engine state and fuel properties.

Contrail mitigation action may be preferentially limited to the mitigation of persistent contrails, i.e. those forming in ambient air which is supersaturated with respect to ice.

Additionally or alternatively, contrail mitigation may be preferentially limited to contrails forming in conditions where the likely cooling effect of the contrail (related to reflection of incoming sunlight away from the earth) is small or zero, for example contrails whose expected existence is primarily in night-time hours.

Optionally, contrail mitigation by engine-efficiency reduction (such as opening handling bleeds) could be restricted to locations lying within a pre-determined distance of the aircraft's departure airport. This would have the advantage of limiting the additional fuel-burn penalty associated with carrying extra fuel required to achieve efficiency-reduction for a desired period.

Account may be taken of the likely duration of a contrail-mitigation episode (and hence the additional fuel required to achieve contrail mitigation for the desired duration) as well as the distance over which that extra fuel must be carried and the resulting total fuel-burn penalty.

Optionally, for each potential contrail mitigation episode the achievable contrail-related climate benefit may be compared to the overall fuel-burn penalty, the latter calculated by taking account not only of a first quantity of additional fuel required to maintain the required total net forward thrust to the aircraft during a contrail-mitigation episode, but also of a second quantity of additional fuel necessary to carry the additional weight associated with the first quantity of additional fuel to the location of the contrail-mitigation episode, taking account of the distance between the departure airport of the aircraft and the location of the contrail-mitigation episode, and to decline to carry out contrail-mitigation in cases where the contrail-related benefit does not exceed the fuel-burn penalty (including CO₂-related costs) by at least a pre-determined threshold amount.

### Step 2:

Consider for current flight conditions the extent of engine operating efficiency change (Δη) required to suppress contrail formation or achieve a desired level of contrail property modification, and the associated TET rise (ΔTET) that would be incurred (in the absence of the present invention) to maintain desired thrust on each engine independently (i.e. without redistributing thrust between engines) (316). The extent of required engine operating efficiency change is calculated using methods and equations given in, for example, *"*On conditions for contrail formation from aircraft exhausts" by U. Schumann, Meteorologische Zeitscrift 5, pp 4-23, 1996, or derived therefrom. The corresponding required bleed valve flow-rate and the resulting TET rise can be calculated using standard methods. The following logic is executed by the controller 250:
∘ IF the required engine efficiency change and the resulting TET rise lies within acceptable limits and if contrail mitigation is an overriding priority (318) THEN contrail mitigation should be attempted on all engines (322); then end (324). Do not proceed to step 3, but instead proceed to step 5. ELSE if contrail mitigation is not an overriding priority, and other factors such as cost-effectiveness of contrail mitigation and/or the minimisation of TET rise are to be taken into account, then proceed to step 3 below.
∘ ELSE proceed to step 3 below.

### Step 3:

Identify (326) an ice-supersaturation (ISS) regime A, B, C or D as follows:
Regime A - ambient air is not ice-supersaturated i.e. ambient relative humidity over ice (RHi) is less than 100%. In this regime, contrail ice particles sublime over a relatively short time (tens of seconds to low single-digit minutes), irrespective of any interaction with aircraft wingtip vortices. Hence it may be decided not to attempt contrail mitigation (and hence not to incur the fuel burn penalty) since the resulting climate benefit (i.e. the resulting reduction in contrail-attributable climate warming impact) is likely to be small.

Regime B - ambient air is slightly ice-supersaturated, i.e. the relative humidity over ice (RHi) is greater than or equal to 100% and less than or equal to a first threshold such as approximately 110% or approximately 120%. In this regime, contrails are able to persist due to ambient ice super-saturation. However, the vast majority of ice particles which find themselves captured and retained within the aircraft wingtip vortices will advantageously be eliminated.

Regime C - ambient air is moderately ice-supersaturated, for example RHi lies between the first threshold and a second threshold such as approximately 130%. In this regime, although a material proportion of contrail ice particles captured within the wingtip vortex is eliminated, a further material proportion is not eliminated. Furthermore, the turbulence within the vortex enables the ice particles to cover a greater volume of sky, and to access a greater mass of ambient water vapour, following release from the vortex. The balance between reduction or increase of post-vortex contrail optical depth attributable to the vortex interaction may lie in either direction, according to the degree of ambient ice super-saturation.

Regime D - ambient air is highly supersaturated with respect to ice, for example RHi is greater than or equal to the second threshold. In this regime, only a very small proportion of contrail ice particles is eliminated within the descending wingtip vortex, and furthermore the turbulence within the vortex enables the ice particles to cover a greater volume of sky, and to access a greater mass of ambient water vapour, following release from the vortex. In other words, in this regime, wingtip vortex interaction may disadvantageously increase contrail post-vortex total-extinction.

### Step 4:

Identify (328) one or more "targeted" engine(s) with reference to aircraft geometry and to the identified regime of operation, as follows:
The set of "targeted" engines is a first subset of the aircraft's engines upon which contrail mitigation is to be attempted by reducing operating efficiency. Its cardinality may range from 0 to n where n is the number of engines on the aircraft. If that set is also a proper subset of the aircraft's engines (i.e. its cardinality is no greater than n-1), then the remaining engines are the "non-targeted" engines; these engines will be assigned to a second subset of the aircraft's engines and will have their fuel-flows increased. In the special case where its cardinality is zero, no contrail mitigation is attempted. In the special case where its cardinality is n, contrail mitigation via reduction in engine operating efficiency is attempted on all engines.

If the aircraft's engines are all mounted at substantially the same distance from the nearest wingtip (as is the case for most conventional two-engined aircraft) then the issue of wingtip vortex interaction does not need to be taken into account when identifying the "targeted" engines. In such cases, the decision may be taken with reference to cross wind (such that any resulting thrust asymmetry is advantageous rather than disadvantageous) and/or with reference to which engine(s) were targeted on previous occasions (to share out any additional life usage implications).

If however there is a clear distinction between different engines with respect to the wingtips, for example on a 3 or 4-engined aircraft the difference between inboard and outboard engines, then the one or more targeted engine(s) is chosen with reference to the identified regime of operation as follows:
▪ REGIME A: Most likely no contrail mitigation action would be taken (as explained in step 3 above). However in the unlikely event that mitigation of non-persistent contrails is deemed necessary or desirable, the mitigation action should be targeted to the one or more inboard engine, since the inboard engine contrails will benefit to a lesser extent from wingtip vortex interaction (and therefore early sublimation) than will the outboard engine contrails.
▪ REGIME B: target inboard engine contrails for mitigation since they are less strongly interacting with wingtip vortices and hence the benefits of suppressing inboard engine contrails are greater than those of suppressing outboard engine contrails. Any increase in soot emissions by the outboard engines associated with increasing their thrust settings will be at least partly mitigated by the wingtip vortex interaction.
▪ REGIME C: Elimination of contrail ice particles within the wingtip vortex is not so strong in this regime. Any ice particles not eliminated are spread around by vortex turbulence (i.e. the spatial extent of the contrail is increased) and so individual particles are able to access more ambient water vapour and so grow to a larger size, thus slightly increasing their individual contributions to contrail optical depth. Depending on where the balance lies, and depending upon the number of additional contrail particles attributable to increased soot emissions associated with increasing thrust on the non-targeted engines, either the inboard or the outboard engines may be targeted for contrail mitigation.
▪ REGIME D: target contrail mitigation to the outboard engines, in other words, the outboard engines would be the 'targeted' engines, while the inboard ('non-targeted') engines would be used to make up any thrust deficit associated with reducing efficiency of the 'targeted' engines. Again, this choice could be reversed if the increase in soot emissions of the non-targetted engines meant that the rise in optical depth of the non-suppressed contrail(s) outweighs the reduction to zero of the optical depth of the suppressed contrails.

### Step 5:

Implement (330) the opening of handling bleeds on the targetted engine(s) to the desired extent to achieve the desired efficiency reduction (the desired extent being determined with reference to a pre-populated lookup-table/database, or alternatively by computation on board the aircraft). Any shaft-speed transients which may arise from sudden opening of bleed valves can be mitigated by limiting the rate at which the valves open. This aspect may already be taken account of in existing engine control software. Further adjustments could be made, fine tuning the engine efficiency in response to observations of contrail formation/suppression/property-modification (e.g. by one or more cameras positioned so as to observe in its field of view a region in which contrail formation may occur behind the one or more targeted engines) so as to ensure that engine operating efficiency is as high as possible subject to achieving contrail suppression or a desired extent of contrail property modification.

### Step 6:

Manage (330) thrust distribution between the targeted and non-targeted engines according to one of the following three options. In the event that contrail mitigation was attempted on all engines, then the thrust will be distributed evenly between all engines and the following options will not apply.
∘ First thrust distribution option: Make up the entirety of the "missing thrust" - arising from efficiency reduction of the targeted engines - by increasing the fuel-flow rate to the non-targeted engines.
∘ Second thrust distribution option: Alternatively, adjust the fuel-flow rates to both targeted and non-targeted engines such that TET is substantially the same on all engines and the aircraft's total thrust requirement is met. This approach may be necessary in cases where the first thrust distribution option is not feasible due to TET limits on the non-targeted engines. Alternatively, even in cases where TET limits are not likely to be exceeded, this approach may nonetheless be desirable for reasons of minimising the maximum TET experienced by any one engine.
∘ Third thrust distribution option: Alternatively, subject to the requirement to avoid exceeding TET limits, thrust could be further redistributed from the one or more targeted engines towards the non-targeted engines. In comparison with the first thrust distribution option this would involve a reduction of fuel-flow rate to the targeted engines and a further increase to the non-targeted engines.

Then end (332).

### Step 7:

The handling-bleed setting on the one or more targeted engine, and the thrust distribution between engines, may be reassessed in response to a material change in ambient conditions and/or commanded thrust levels.

### Step 8:

For safety purposes, contrail mitigation using the method of the present invention could be disabled during one or more section of flight such as (i) the landing and take-off cycle, and/or (ii) below a certain altitude such as 3048 m (10000 feet) or 6096 m (20000 feet) above sea level, and/or (ii) below a certain altitude such as 1524 m (5000 feet) above ground level. Contrail mitigation using the method of the present invention could further be automatically disabled during periods in which the total commanded thrust level exceeded a pre-determined threshold. For example, contrail mitigation using the method of the present invention could be disabled during climb and/or during step climb.

The method of the invention introduces a specific fuel consumption (SFC) penalty when carried out. Not only will the targeted engine(s) operate temporarily at a reduced efficiency level due to the use of handling bleeds (or some other efficiency-reducing measure is used), but the non-targeted engines may potentially be moved to a slightly less efficient operating condition through a change in their thrust settings. Furthermore, an aircraft will be required to carry additional fuel to a location where the method is carried out, resulting in a further (second-order) fuel-burn penalty. Although measures to mitigate the fuel-burn penalty are presented above, nonetheless it will be appreciated that it is important that the aircraft be loaded prior to flight with an appropriate amount of additional fuel in support of contrail modification.

Ideally, sufficient additional fuel should be loaded such that an aircraft will be able to take advantage of all cost-effective contrail-modification opportunities that it may encounter during the flight. At the same time, excess additional fuel (i.e. more than would be required) should not be loaded in the interests of minimising total aircraft weight.

Preferably, expected contrail modification requirements should be estimated or calculated in advance and used to determined an additional fuel requirement for a flight. The calculations will mirror those which take place on board the aircraft, but using forecasts of ambient temperature, pressure and humidity rather than instantaneous measured values.

Preferably, an additional fuel requirement would be determined on a flight by flight basis, since different flights encounter ice-supersaturated air to different extents according to their routes (which can vary from day to day), and the prevailing weather. For example, referring to Figure 5, a flight on path P does not encounter ice-supersaturated (ISS) air at all (and so in the present invention might require no additional fuel for the purposes of contrail modification), a flight on path Q encounters ISS air for a large proportion of its route, and flight on path R encounters ISS air only briefly.

In an aircraft of the invention in which handling bleed air is used as a means of reducing the efficiencies of engines targeted for contrail mitigation action, preferably bleed air is taken from the output of a compressor because inter-stage bleeds may disadvantageously affect surge lines of the compressor and/or may require modification of a variable inlet guide vane schedule. Use of bleed air taken from the output of a high-pressure compressor of an engine allows a relatively large reduction in engine efficiency per unit mass of air removed from the core cycle of the engine, thus resulting in a relatively low increase in TET. However, handling bleed air taken from the output of a high-pressure compressor has a substantially higher temperature than bleed air taken from a low-pressure compressor, or an intermediate-pressure pressure in a three-shaft engine, which may present handling difficulties. In a three-shaft engine, use of bleed air taken from output of the intermediate compressor of the engine offers a balance between modest TET rise per unit mass of bleed air and ease of handling of the bleed air.

Bleed air taken from the output of a compressor of an engine may be introduced into the engine's bypass duct. However, advantageously it may be vented in a direction having at least a component in the direction of travel of the aircraft in which the engine is comprised, thus producing a greater reduction in engine operating efficiency per unit mass flow rate of bleed air and limiting the associated rise in TET. The engine's reverse-thrust system may also be deployed to a very small extent to further reduce engine operating efficiency.

Bleed air taken from the output of a compressor of an engine may be arranged to pass through a conduit arranged for heat-exchange with the bypass air of the engine, thus warming the bypass air and reducing the range of altitudes over which contrails may form. The cooled bleed air may be passed to a cabin of an aircraft comprising the engine to provide cabin environmental control.

In variants of the example aircraft described above, each gas turbine engine is a turbo-prop engine. In such cases "bypass air" referred to above should be interpreted as air immediately outside a turbo-prop engine.

Bleed air taken from the output of a compressor of an engine may be introduced into the engine's bypass duct. However, advantageously it may be vented in a direction having at least a component in the direction of travel of the aircraft in which the engine is comprised, thus producing a greater reduction in engine operating efficiency per unit mass flow rate of bleed air and limiting the associated rise in TET. The engine's reverse-thrust system may also be deployed to a very small extent to further reduce engine operating efficiency.

Bleed air taken from the output of a compressor of an engine may be arranged to pass through a conduit arranged for heat-exchange with the bypass air of the engine, thus warming the bypass air and reducing the range of altitudes over which contrails may form. The cooled bleed air may be passed to a cabin of an aircraft comprising the engine to provide cabin environmental control.

In variants of the example aircraft described above, each gas turbine engine is a turbo-prop engine. In such cases "bypass air" referred to above should be interpreted as air immediately outside a turbo-prop engine.

## Claims

1. A method of reducing the respective optical depths of one or more contrails produced by an aircraft having a set of at least two gas turbine engines each of which is arranged to provide propulsive thrust to the aircraft, the set of at least two gas turbine engines consisting of first and second subsets of gas turbine engines, the method being **characterised by** the steps of:
(i) for each gas turbine engine in the first subset of the set of gas turbine engines, reducing (330) the operating efficiency of a gas turbine engine independently of the fuel flow to that engine and hence producing a reduction in thrust provided by that gas turbine engine;
(ii) for each gas turbine engine in the second subset of the set of gas turbine engines, increasing (330) the fuel flow to a gas turbine engine to increase the thrust provided by that gas turbine engine; and
(iii) controlling the fuel flow to each gas turbine engine in the first subset,
such that each gas turbine engine in the set of gas turbine engines experiences substantially the same increase in turbine entry temperature and/or the same resulting turbine entry temperature.

2. A method according to claim 1 wherein the set of gas turbine engines is a set of like gas turbine engines and wherein the operating efficiency of each gas turbine engine in the first subset of the set of gas turbine engines is reduced in step (i) by a common amount to produce a common reduction in thrust provided by each gas turbine engine in the first subset, and the fuel flow to each gas turbine engine in the second subset of the set of gas turbine engines is increased in step (ii) by a common amount to increase the thrust provided by each gas turbine engine in the second subset by a common amount.

3. A method according to claim 1 or claim 2 where the total increase in thrust provided by gas turbine engines of the second subset is equal to the total reduction in thrust provided by gas turbine engines of the first subset.

4. A method according to any preceding claim wherein the fuel flow to each gas turbine engine in the first subset is kept constant when step (i) is carried out.

5. A method according to any of claims 1 to 3 wherein the fuel flow to one or more gas turbine engines in the first subset is increased when step (i) is carried out thereby mitigating the reduction in thrust provided by the one or more gas turbine engines of the first subset when their operating efficiencies are reduced.

6. A method according to any of claims 1 to 3 wherein the fuel flow to one or more gas turbine engines in the first subset is reduced when step (i) is carried out thereby causing a greater reduction in thrust provided by the one or more gas turbine engines of the first subset than that attributable only to reduction in operating efficiencies of the one or more gas turbine engines in the first subset.

7. A method according to any preceding claim wherein in step (i) the respective operating efficiencies of one or more gas turbine engines in the first subset are reduced by opening respective handling bleeds thereof.

8. A method according to claim 7 wherein each handling bleed is switched from a closed condition to an open condition over a period of time greater than or equal to a pre-determined minimum period of time necessary to prevent spool-speed transients in the one or more gas turbine engines of the first subset.

9. An aircraft (200) comprising a set of at least two gas turbine engines (220; 230) each of which is arranged to provide propulsive thrust to the aircraft, the set of at least two gas turbine engines consisting of first and second subsets of gas turbine engines, a controller (250) and at least one sensor arranged to detect one or more ambient conditions of the aircraft and provide corresponding sensor data to the controller, **characterised in that** the controller is arranged to control:
(a) the operating efficiency of any given gas turbine engine within the first subset of the set of gas turbine engines, independently of the fuel flow to that engine;
(b) the fuel flow to each gas turbine engine within the second subset of the set of gas turbine engines; and
(c) the fuel flow to any given gas turbine engine in the first subset,
in order to implement a method according to any of claims 1 to 8 on receiving sensor data corresponding to ambient atmospheric conditions of the aircraft consistent with contrail formation.

10. An aircraft according to claim 9 wherein the controller is arranged to control the operating efficiency of each gas turbine engine in the first subset by controlling respective handling bleeds thereof.

11. An aircraft according to claim 9 or claim 10 wherein the first and second subsets of the set of gas turbine engines are respectively inboard (220) and outboard (230) gas turbine engines of the aircraft and the controller is arranged to implement the method when the ambient air of the aircraft has a relative humidity over ice RHi in the range 100% ≤ RHi ≤ X where X is in the range 110% ≤ X ≤ 120%.

12. An aircraft according to any of claim 9 or claim 10 wherein the first and second subsets of the set of gas turbine engines are respectively outboard (230) and inboard (220) gas turbine engines of the aircraft respectively and the controller is arranged to implement the method when the ambient air of the aircraft has a relative humidity over ice RHi ≥ X where X is approximately 130%.

13. An aircraft according to claim 11 or 12 wherein the controller is arranged to estimate the reduction in effective radiative forcing and the increase in fuel consumption which would result from implementing the method, and to implement the method only if the reduction in effective radiative forcing per unit of additional fuel consumption exceeds a pre-determined threshold.

## Patentansprüche

1. Verfahren zum Reduzieren der jeweiligen optischen Tiefen von einem oder mehreren Kondensstreifen, die durch ein Flugzeug mit einem Satz von zumindest zwei Gasturbinentriebwerken produziert werden, von denen jedes dazu angeordnet ist, dem Flugzeug Vortriebsschub bereitzustellen, wobei der Satz von zumindest zwei Gasturbinentriebwerken aus einem ersten und einem zweiten Teilsatz von Gasturbinentriebwerken besteht, wobei das Verfahren durch die folgenden Schritte gekennzeichnet ist:
(i) für jedes Gasturbinentriebwerk in dem ersten Teilsatz des Satzes von Gasturbinentriebwerken, Reduzieren (330) der Betriebseffizienz eines Gasturbinentriebwerks unabhängig von dem Kraftstoffstrom zu diesem Triebwerk und somit Produzieren einer Reduzierung an Schub, der durch dieses Gasturbinentriebwerk bereitgestellt wird;
(ii) für jedes Gasturbinentriebwerk in dem zweiten Teilsatz des Satzes von Gasturbinentriebwerken, Erhöhen (330) des Kraftstoffstroms zu einem Gasturbinentriebwerk, um den Schub, der durch dieses Gasturbinentriebwerk bereitgestellt wird, zu erhöhen; und
(iii) Steuern des Kraftstoffstroms zu jedem Gasturbinentriebwerk in dem ersten Teilsatz,
sodass jedes Gasturbinentriebwerk in dem Satz von Gasturbinentriebwerken im Wesentlichen die gleiche Erhöhung der Turbineneintrittstemperatur und/oder die gleiche resultierende Turbineneintrittstemperatur erfährt.

2. Verfahren nach Anspruch 1, wobei der Satz von Gasturbinentriebwerken ein Satz von ähnlichen Gasturbinentriebwerken ist und wobei die Betriebseffizienz jedes Gasturbinentriebwerks in dem ersten Teilsatz des Satzes von Gasturbinentriebwerken in Schritt (i) um eine gemeinsame Menge reduziert wird, um eine gemeinsame Reduzierung an Schub zu produzieren, der durch jedes Gasturbinentriebwerk in dem ersten Teilsatz bereitgestellt wird, und der Kraftstoffstrom zu jedem Gasturbinentriebwerk in dem zweiten Teilsatz des Satzes von Gasturbinentriebwerken in Schritt (ii) um eine gemeinsame Menge erhöht wird, um den Schub, der durch jedes Gasturbinentriebwerk in dem zweiten Teilsatz bereitgestellt wird, um eine gemeinsame Menge zu erhöhen.

3. Verfahren nach Anspruch 1 oder Anspruch 2, wobei die Gesamterhöhung an Schub, der durch Gasturbinentriebwerke des zweiten Teilsatzes bereitgestellt wird, gleich der Gesamtreduzierung an Schub ist, der durch Gasturbinentriebwerke des ersten Teilsatzes bereitgestellt wird.

4. Verfahren nach einem vorhergehenden Anspruch, wobei der Kraftstoffstrom zu jedem Gasturbinentriebwerk in dem ersten Teilsatz konstant gehalten wird, wenn Schritt (i) durchgeführt wird.

5. Verfahren nach einem der Ansprüche 1 bis 3, wobei der Kraftstoffstrom zu einem oder mehreren Gasturbinentriebwerken in dem ersten Teilsatz erhöht wird, wenn Schritt (i) durchgeführt wird, wodurch die Reduzierung an Schub, der durch das eine oder die mehreren Gasturbinentriebwerke des ersten Teilsatzes bereitgestellt wird, abgeschwächt wird, wenn ihre Betriebseffizienzen reduziert werden.

6. Verfahren nach einem der Ansprüche 1 bis 3, wobei der Kraftstoffstrom zu einem oder mehreren Gasturbinentriebwerken in dem ersten Teilsatz reduziert wird, wenn Schritt (i) durchgeführt wird, wodurch eine größere Reduzierung an Schub bewirkt wird, der durch das eine oder die mehreren Gasturbinentriebwerke des ersten Teilsatzes bereitgestellt wird, als derjenige, der nur auf Reduzierung von Betriebseffizienzen des einen oder der mehreren Gasturbinentriebwerke in dem ersten Teilsatz zurückzuführen ist.

7. Verfahren nach einem vorhergehenden Anspruch, wobei in Schritt (i) die jeweiligen Betriebseffizienzen von einem oder mehreren Gasturbinentriebwerken in dem ersten Teilsatz durch Öffnen von jeweiligen Handhabungsentlüftungen davon reduziert werden.

8. Verfahren nach Anspruch 7, wobei jede Handhabungsentlüftung über einen Zeitraum, der größer als ein oder gleich einem vorbestimmten Mindestzeitraum ist, der erforderlich ist, um Spulengeschwindigkeitstransienten in dem einen oder den mehreren Gasturbinentriebwerken des ersten Teilsatzes zu verhindern, von einem geschlossenen Zustand zu einem offenen Zustand umgeschaltet wird.

9. Flugzeug (200), umfassend einen Satz von zumindest zwei Gasturbinentriebwerken (220; 230), von denen jedes dazu angeordnet ist, dem Flugzeug Vortriebsschub bereitzustellen, wobei der Satz von zumindest zwei Gasturbinentriebwerken aus einem ersten und einem zweiten Teilsatz von Gasturbinentriebwerken besteht, eine Steuerung (250) und zumindest einen Sensor, der dazu angeordnet ist, eine oder mehrere Umgebungsbedingungen des Flugzeugs zu detektieren und der Steuerung entsprechende Sensordaten bereitzustellen, **dadurch gekennzeichnet, dass** die Steuerung dazu angeordnet ist, Folgendes zu steuern:
(a) die Betriebseffizienz eines beliebigen gegebenen Gasturbinentriebwerks innerhalb des ersten Teilsatzes des Satzes von Gasturbinentriebwerken, unabhängig von dem Kraftstoffstrom zu diesem Triebwerk;
(b) den Kraftstoffstrom zu jedem Gasturbinentriebwerk innerhalb des zweiten Teilsatzes des Satzes von Gasturbinentriebwerken; und
(c) den Kraftstoffstrom zu einem beliebigen gegebenen Gasturbinentriebwerk in dem ersten Teilsatz,
um ein Verfahren nach einem der Ansprüche 1 bis 8 beim Empfangen von Sensordaten entsprechend atmosphärischen Umgebungsbedingungen des Flugzeugs übereinstimmend mit Kondensstreifenbildung zu implementieren.

10. Flugzeug nach Anspruch 9, wobei die Steuerung dazu angeordnet ist, die Betriebseffizienz jedes Gasturbinentriebwerks in dem ersten Teilsatz durch Steuern von jeweiligen Handhabungsentlüftungen davon zu steuern.

11. Flugzeug nach Anspruch 9 oder Anspruch 10, wobei der erste und der zweite Teilsatz des Satzes von Gasturbinentriebwerken jeweils innenliegende (220) und außenliegende (230) Gasturbinentriebwerke des Flugzeugs sind und die Steuerung dazu angeordnet ist, das Verfahren zu implementieren, wenn die Umgebungsluft des Flugzeugs eine relative Luftfeuchtigkeit über Eis RHi in dem Bereich 100 % ≤ RHi ≤ X aufweist, wobei X in dem Bereich 110 % ≤ X ≤ 120 % ist.

12. Flugzeug nach einem von Anspruch 9 oder Anspruch 10, wobei der erste und der zweite Teilsatz des Satzes von Gasturbinentriebwerken jeweils außenliegende (230) und innenliegende (220) Gasturbinentriebwerke des Flugzeugs sind und die Steuerung dazu angeordnet ist, das Verfahren zu implementieren, wenn die Umgebungsluft des Flugzeugs eine relative Luftfeuchtigkeit über Eis RHi ≥ X aufweist, wobei X ungefähr 130 % ist.

13. Flugzeug nach Anspruch 11 oder 12, wobei die Steuerung dazu angeordnet ist, die Reduzierung des effektiven Strahlungsantriebs und die Erhöhung des Kraftstoffverbrauchs, die aus dem Implementieren des Verfahrens resultieren würden, zu schätzen und das Verfahren nur zu implementieren, wenn die Reduzierung des effektiven Strahlungsantriebs pro Einheit an zusätzlichem Kraftstoffverbrauch einen vorbestimmten Schwellenwert überschreitet.

## Revendications

1. Procédé de réduction des profondeurs optiques respectives d'une ou de plusieurs traînées de condensation produites par un aéronef présentant un ensemble d'au moins deux moteurs à turbine à gaz dont chacun est agencé pour fournir une poussée propulsive à l'aéronef, l'ensemble d'au moins deux moteurs à turbine à gaz étant constitué d'un premier et d'un second sous-ensemble de moteurs à turbine à gaz, le procédé étant **caractérisé par** les étapes de :
(i) pour chaque moteur à turbine à gaz dans le premier sous-ensemble de l'ensemble de moteurs à turbine à gaz, réduction (330) de l'efficacité de fonctionnement d'un moteur à turbine à gaz indépendamment de l'écoulement de carburant vers ce moteur et ainsi production d'une réduction de la poussée fournie par ce moteur à turbine à gaz ;
(ii) pour chaque moteur à turbine à gaz dans le second sous-ensemble de l'ensemble de moteurs à turbine à gaz, augmentation (330) de l'écoulement de carburant vers un moteur à turbine à gaz pour augmenter la poussée fournie par ce moteur à turbine à gaz ; et
(iii) la commande de l'écoulement de carburant vers chaque moteur à turbine à gaz dans le premier sous-ensemble, de sorte que chaque moteur à turbine à gaz dans l'ensemble de moteurs à turbine à gaz subit sensiblement la même augmentation de température d'entrée de turbine et/ou la même température d'entrée de turbine résultante.

2. Procédé selon la revendication 1, dans lequel l'ensemble de moteurs à turbine à gaz est un ensemble de moteurs à turbine à gaz similaires et dans lequel l'efficacité de fonctionnement de chaque moteur à turbine à gaz dans le premier sous-ensemble de l'ensemble de moteurs à turbine à gaz est réduite à l'étape (i) d'une quantité commune pour produire une réduction commune de la poussée fournie par chaque moteur à turbine à gaz dans le premier sous-ensemble, et l'écoulement de carburant vers chaque moteur à turbine à gaz dans le second sous-ensemble de l'ensemble de moteurs à turbine à gaz est augmenté à l'étape (ii) d'une quantité commune pour augmenter la poussée fournie par chaque moteur à turbine à gaz dans le second sous-ensemble d'une quantité commune.

3. Procédé selon la revendication 1 ou la revendication 2, où l'augmentation totale de la poussée fournie par les moteurs à turbine à gaz du second sous-ensemble est égale à la réduction totale de la poussée fournie par les moteurs à turbine à gaz du premier sous-ensemble.

4. Procédé selon l'une quelconque des revendications précédentes, dans lequel l'écoulement de carburant vers chaque moteur à turbine à gaz dans le premier sous-ensemble est maintenu constant lorsque l'étape (i) est effectuée.

5. Procédé selon l'une quelconque des revendications 1 à 3, dans lequel l'écoulement de carburant vers un ou plusieurs moteurs à turbine à gaz dans le premier sous-ensemble est augmenté lorsque l'étape (i) est effectuée, atténuant ainsi la réduction de la poussée fournie par les un ou plusieurs moteurs à turbine à gaz du premier sous-ensemble lorsque leurs efficacités de fonctionnement sont réduites.

6. Procédé selon l'une quelconque des revendications 1 à 3, dans lequel l'écoulement de carburant vers un ou plusieurs moteurs à turbine à gaz dans le premier sous-ensemble est réduit lorsque l'étape (i) est effectuée, amenant ainsi une réduction plus importante de la poussée fournie par les un ou plusieurs moteurs à turbine à gaz du premier sous-ensemble que celle attribuable uniquement à la réduction des efficacités de fonctionnement des un ou plusieurs moteurs à turbine à gaz dans le premier sous-ensemble.

7. Procédé selon l'une quelconque des revendications précédentes, dans lequel, à l'étape (i), les efficacités de fonctionnement respectives d'un ou de plusieurs moteurs à turbine à gaz dans le premier sous-ensemble sont réduites en ouvrant des purgeurs de manipulation respectifs de ceux-ci.

8. Procédé selon la revendication 7, dans lequel chaque purgeur de manipulation est commuté d'une condition fermée à une condition ouverte sur une période temporelle supérieure ou égale à une période temporelle minimale prédéterminée nécessaire pour empêcher des transitoires de vitesse de bobine dans les un ou plusieurs moteurs à turbine à gaz du premier sous-ensemble.

9. Aéronef (200) comprenant un ensemble d'au moins deux moteurs à turbine à gaz (220 ; 230) dont chacun est agencé pour fournir une poussée propulsive à l'aéronef, l'ensemble d'au moins deux moteurs à turbine à gaz étant constitué d'un premier et d'un second sous-ensemble de moteurs à turbine à gaz, un dispositif de commande (250) et au moins un capteur agencé pour détecter une ou plusieurs conditions ambiantes de l'aéronef et fournir des données de capteur correspondantes au dispositif de commande, **caractérisé en ce que** le dispositif de commande est agencé pour commander :
(a) l'efficacité de fonctionnement de tout moteur à turbine à gaz donné dans le premier sous-ensemble de l'ensemble de moteurs à turbine à gaz, indépendamment de l'écoulement de carburant vers ce moteur ;
(b) l'écoulement de carburant vers chaque moteur à turbine à gaz dans le second sous-ensemble de l'ensemble de moteurs à turbine à gaz ; et
(c) l'écoulement de carburant vers tout moteur à turbine à gaz donné dans le premier sous-ensemble,
afin de mettre en œuvre un procédé selon l'une quelconque des revendications 1 à 8 lors de la réception de données de capteur correspondant à des conditions atmosphériques ambiantes de l'aéronef cohérentes avec la formation de traînées de condensation.

10. Aéronef selon la revendication 9, dans lequel le dispositif de commande est agencé pour commander l'efficacité de fonctionnement de chaque moteur à turbine à gaz dans le premier sous-ensemble en commandant des purgeurs de manipulation respectifs de ceux-ci.

11. Aéronef selon la revendication 9 ou la revendication 10, dans lequel les premier et second sous-ensembles de l'ensemble de moteurs à turbine à gaz sont respectivement des moteurs à turbine à gaz intérieurs (220) et extérieurs (230) de l'aéronef et le dispositif de commande est agencé pour mettre en œuvre le procédé lorsque l'air ambiant de l'aéronef présente une humidité relative sur la glace RHi dans la plage 100 % ≤ RHi ≤ X où X est dans la plage 110 % ≤ X ≤ 120 %.

12. Aéronef selon l'une quelconque des revendications 9 ou 10, dans lequel les premier et second sous-ensembles de l'ensemble de moteurs à turbine à gaz sont respectivement des moteurs à turbine à gaz extérieurs (230) et intérieurs (220) de l'aéronef, respectivement, et le dispositif de commande est agencé pour mettre en œuvre le procédé lorsque l'air ambiant de l'aéronef présente une humidité relative sur la glace RHi ≥ X, où X est d'environ 130 %.

13. Aéronef selon la revendication 11 ou 12, dans lequel le dispositif de commande est agencé pour estimer la réduction de forçage radiatif effectif et l'augmentation de consommation de carburant qui résulteraient de la mise en œuvre du procédé, et pour mettre en œuvre le procédé uniquement si la réduction de forçage radiatif effectif par unité de consommation de carburant supplémentaire dépasse un seuil prédéterminé.
